# FASCICULE DE BREVET EUROPEEN

(11) **EP 4 538 056 B1**
(45) Date de publication et mention de la délivrance du brevet: **22.04.2026**
(21) Numéro de dépôt: 23203178.1
(22) Date de dépôt: 12.10.2023
(51) Int. Cl.: B60C 7/06, B60C 7/14, B60C 99/00

(54) **ROUE DÉFORMABLE À SUPPORT DE CHARGE NON-PNEUMATIQUE ET À CHAUFFAGE DE LA BANDE DE ROULEMENT POUR DES CONDITIONS LUNAIRES ET MARTIENNES**
VERFORMBARES RAD MIT NICHT-PNEUMATISCHER LAUFSTREIFEN UND MIT LAUFFLÄCHENHEIZUNG FÜR BEDINGUNGEN AUF DEM MOND UND MARS
DEFORMABLE WHEEL WITH NON-PNEUMATIC LOAD SUPPORT AND TREAD HEATING FOR LUNAR AND MARTIAN CONDITIONS

(43) Date de publication de la demande: 16.04.2025
(73) Titulaire: Venturi Lab SA, 1720 Corminboeuf (CH)
(72) Inventeur: OLSOMMER, David, 1616 ATTALENS (CH); SCHROETER, Pascal, 1720 CORMINBOEUF (CH); DELFINO, Antonio, 1772 GROLLEY (CH); BAUMGARTNER, Gérard, 1684 MEZIERES (CH); SCHMUTZ, Laurent, 1783 PENSIER (CH)
(74) Mandataire: Cabinet Beau de Loménie

(56) Documents cités:
- WO-A1-2017/116238
- WO-A1-2019/115905
- CN-A- 114 393 956
- CN-B- 109 720 148
- FR-A3- 3 090 498
- JP-A- H 082 204

## Description

### Arrière-plan de l'invention

La présente invention concerne une roue déformable à support de charge non-pneumatique. Plus particulièrement, l'invention concerne une roue qui supporte une charge avec ses composants structurels et qui a des capacités de performance adaptées à équiper un véhicule destiné à rouler dans des conditions extrêmes comme celles rencontrées sur la Lune et sur Mars.

La roue pneumatique possède des capacités de support de charge, d'absorption des chocs de la route et de transmission de force (accélérations, arrêts et changements de direction) qui sont particulièrement bien adaptées à de nombreux véhicules, notamment les bicyclettes, les motocyclettes, les automobiles et les camions. Les capacités d'absorption des chocs des pneumatiques sont également utiles dans d'autres applications, par exemple pour les chariots transportant des équipements médicaux ou du matériel électronique sensible.

Des alternatives à la roue pneumatique existent. On pourra par exemple citer les pneus pleins et les pneus à ressorts. Toutefois, ces alternatives ne présentent pas les avantages de performance des roues pneumatiques. En particulier, les pneus pleins reposent sur la compression de la partie en contact avec le sol pour supporter la charge. Ce type de pneus peut être lourd et rigide et n'a pas la capacité d'absorption des chocs des roues pneumatiques. Lorsqu'elles sont rendues plus élastiques, les roues non pneumatiques conventionnelles n'ont pas le support de charge ou l'endurance des roues pneumatiques.

Pour remédier à ces inconvénients, la publication US 7,418,988 propose un pneu à support structurel qui comprend une bande annulaire extérieure et une pluralité de rayons s'étendant transversalement et radialement vers l'intérieur depuis la bande annulaire jusqu'au moyeu de la roue et destinés à transmettre en tension les forces de charge entre la bande annulaire et le moyeu.

La roue structurellement supportée selon cette invention ne comporte pas de cavité destinée à contenir de l'air sous pression et n'a donc pas besoin de disposer d'un joint avec la jante de la roue pour conserver la pression d'air interne. Cette roue à support structurel ne nécessite donc pas de pneu au sens où on l'entend.

Les rayons de cette roue agissent en tension pour transmettre les forces de charge entre la roue et la bande annulaire, ce qui permet notamment de supporter la masse d'un véhicule. Les forces de support sont générées par la tension des rayons qui ne sont pas reliés à la partie de la bande annulaire en contact avec le sol. Les rayons transmettent également les forces requises pour l'accélération, l'arrêt et les virages.

Quelles que soient les alternatives connues de l'art antérieur pour la réalisation de roues non pneumatiques, celles-ci ne donnent généralement pas entière satisfaction, notamment lorsqu'elles sont destinées à rouler dans des conditions extrêmes comme celles rencontrées sur la Lune et sur Mars. En effet, avec de telles conditions, il est nécessaire que la roue puisse se déformer fortement au passage d'un obstacle tout en générant une pression de contact qui soit faible et uniforme pour permettre au véhicule de rester mobile sur un sol meuble tel que le sol que l'on rencontre sur la Lune et sur Mars.

On connaît de la demande de brevet EP22192685 déposée le 29 août 2022 par la Demanderesse une roue permettant de répondre à ces besoins du fait notamment de la présence d'une bande annulaire lamifiée qui comprend une pluralité de viroles concentriques qui sont assemblées avec interposition de couches d'interposition composées chacune d'un matériau dont le module de Young est de 600000 à 1000 fois inférieur à celui des viroles, par exemple en matériau élastomère. Sous une charge appliquée de l'extérieur, la partie de la bande lamifiée en contact avec le sol se déforme, non pas sous une forme essentiellement circulaire, mais sous une forme épousant la surface du sol tout en maintenant une longueur essentiellement constante des viroles. La roue selon cette demande de brevet permet ainsi de générer une pression de contact qui soit faible et uniforme au sol. De la sorte, le véhicule équipé de telles roues peut rester mobile (c'est-à-dire qu'il ne s'ensable pas) même sur un sol meuble (de type sable) tel que rencontré sur la Lune et sur Mars.

La structure à base d'élastomère des couches d'interposition de la bande lamifiée d'une telle roue possède une température de fonctionnement minimum entre -140°C et -150°C, ce qui permet à la roue de fonctionner, d'une part dans la plupart des missions autour du pôle sud lunaire et d'autre part de fonctionner sous toutes les latitudes sur Mars (où la température minimum absolue est de -120°C). Cependant, une telle limite peut poser des problèmes si le véhicule équipé de telles roues doit se rendre dans des régions ombrées en permanence (ou « Permanently Shadowed Regions » ou PSR) comme le sont les pôles lunaires pour lesquelles les températures sont en permanence de l'ordre de -220°C à - 240°C.

La divulgation du document WO 2019/115905-A1 est aussi pertinente pour comprendre l'invention.

### Objet et résumé de l'invention

La présente invention a pour but principal de pallier de tels inconvénients en proposant une structure de roue déformable à support de charge non-pneumatique qui puisse équiper des véhicules destinés à rouler dans des régions de la Lune ombrées en permanence où les températures sont en permanence de l'ordre de -220°C à -240°C.

Conformément à l'invention, ce but est atteint grâce à une roue déformable à support de charge non-pneumatique destinée à équiper un véhicule pour rouler en conditions extrêmes comme celles rencontrées sur la Lune et sur Mars, comprenant :
un moyeu,
une bande annulaire lamifiée destinée à être en contact avec le sol, positionnée autour du moyeu qui lui est concentrique et comprenant une pluralité de viroles concentriques qui sont assemblées avec interposition de couches d'interposition composées chacune d'un matériau dont le module de Young est de 600000 à 1000 fois inférieur à celui des viroles, et
une pluralité de câbles métalliques reliant radialement le moyeu à la bande lamifiée en étant fixé, d'une part par une extrémité extérieure à la bande lamifiée, et d'autre part par une extrémité intérieure au moyeu,
et dans laquelle, conformément à l'invention :
   la bande lamifiée est recouverte d'au moins un revêtement d'isolation thermique réalisé dans au moins un matériau ayant une conductivité thermique inférieure à 0.2 Wm⁻¹K⁻¹, et
   la roue comprend en outre des moyens de chauffage des couches d'interposition de la bande lamifiée.

La roue selon l'invention est remarquable notamment du fait de l'utilisation de moyens de chauffage des couches d'interposition de la bande lamifiée permettant d'éloigner la température de ces couches d'interposition de la température de transition vitreuse du matériau qui les compose. Etant donné que le matériau composant ces couches d'interposition a tendance à auto-générer de la chaleur lorsqu'il se déforme au roulage (du fait d'une résistance au roulement), et que la chaleur générée est d'autant plus élevée que la température du matériau se rapproche de sa température de transition vitreuse, ceci aura pour effet de chauffer davantage la roue pour s'éloigner encore plus de cette température de transition vitreuse.

Par ailleurs, la présence d'un revêtement d'isolation thermique au niveau de la bande lamifiée permet de limiter la conductibilité thermique entre le sol Lunaire et le matériau composant les couches d'interposition de la bande lamifiée.

Il en résulte que la roue selon l'invention est capable de tenir à des températures de l'ordre de -220°C à -240°C que l'on rencontre typiquement dans des régions de la Lune qui sont en permanence à l'ombre.

Les moyens de chauffage de la bande lamifiée peuvent comprendre des contacts tournants pour établir une connexion électrique rotative entre le moyeu de la roue et les viroles de la bande lamifiée.

Dans ce cas, les contacts tournants sont de préférence couplés à des fils électriques chauffant qui sont enroulés dans l'épaisseur des viroles de la bande lamifiée.

Plus précisément, les viroles de la bande lamifiée peuvent être réalisées en matériau composite et les couches d'interposition être composées d'un élastomère hyperélastique, les fils électriques des moyens de chauffage de la bande lamifiée étant noyés dans le matériau composite lors de la fabrication des viroles afin d'acheminer des calories à l'élastomère composant les couches d'interposition.

Dans ce cas, les fils électriques sont avantageusement positionnés au niveau d'une fibre neutre dans le sens circonférentiel du matériau composite, étant la fibre qui ne subit aucune variation de longueur, quelle que soit la déformation en flexion de la virole, en une pluralité de boucles espacées circonférentiellement les unes des autres.

De préférence, les fils électriques chauffant cheminent à l'intérieur d'un ressort dont une extrémité est vissée côté bande lamifiée sur une collerette fixée sur une virole de la bande lamifiée contenant le fils électrique chauffant, et une extrémité opposée est fixée au moyeu.

Le revêtement d'isolation thermique peut être réalisé dans l'un ou plusieurs des matériaux suivants : fibre synthétique d'aramide, fibre de verre, acétate de polyvinyle, et cuir.

De préférence, le revêtement d'isolation thermique est recouvert sous une face interne d'un revêtement métallique pour limiter le transfert d'énergie thermique par radiations.

De préférence également, la roue comprend en outre des moyens de mesure de la température des couches d'interposition de la bande lamifiée.

De préférence encore, la roue comprend en outre des moyens de mesure des déformations et contraintes de la bande lamifiée afin de suivre la performance et la durée de vie de la bande lamifiée pour palier à toute défaillance en cas de mission éloignée d'une base lunaire.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et en perspective d'une roue selon un mode de réalisation de l'invention ;
- la figure 2 est une vue schématique et de face de la roue de la figure 1 en élévation ;
- la figure 3 est une vue en coupe selon III-III de la figure 2 ; et
- la figure 4 montre un exemple de virole de la bande lamifiée de la roue dans laquelle des fils électriques chauffant sont noyés.
- la figure 5 est une vue d'une partie du ressort à l'intérieur duquel cheminent les fils électriques chauffant des couches d'interposition de la bande lamifiée.

### Description détaillée de modes de réalisation

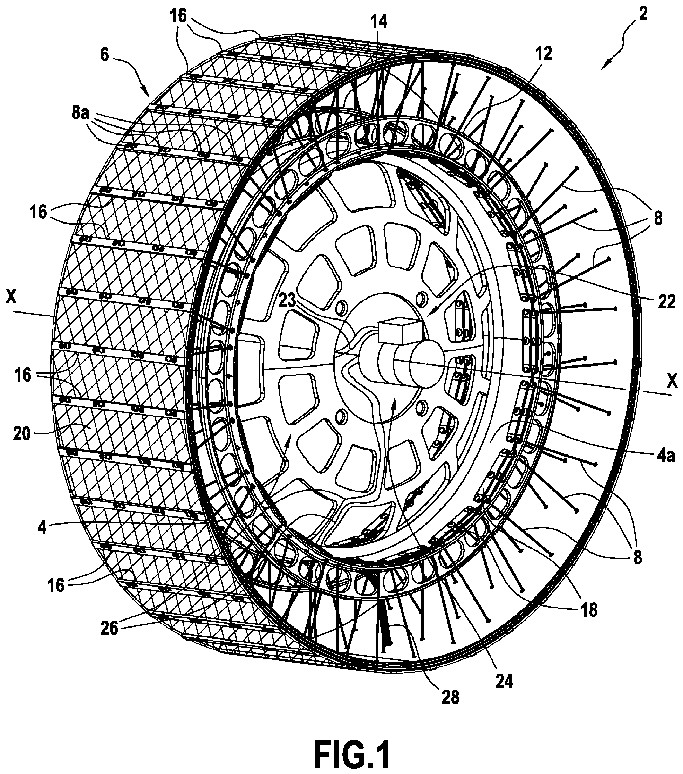

L'invention concerne une roue déformable à support de charge non-pneumatique telle que représentée sur la figure 1 qui est adaptée à équiper un véhicule destiné à rouler dans des conditions extrêmes comme celles rencontrées sur la Lune et sur Mars.

La roue 2 représentée sur la figure 1 comprend principalement un moyeu 4, une bande annulaire lamifiée 6 destinée à être en contact avec le sol, et une pluralité de câbles métalliques 8 reliant radialement le moyeu à la bande lamifiée.

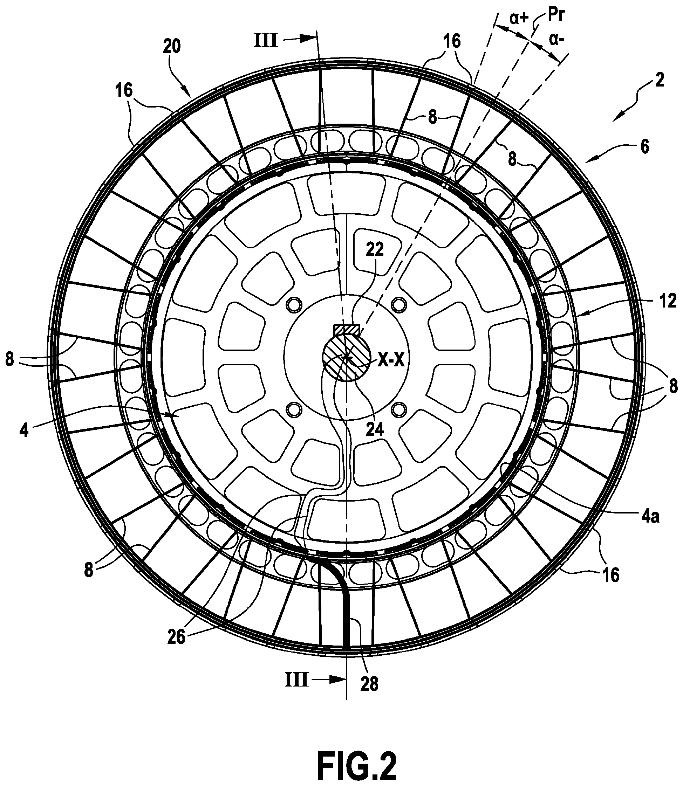

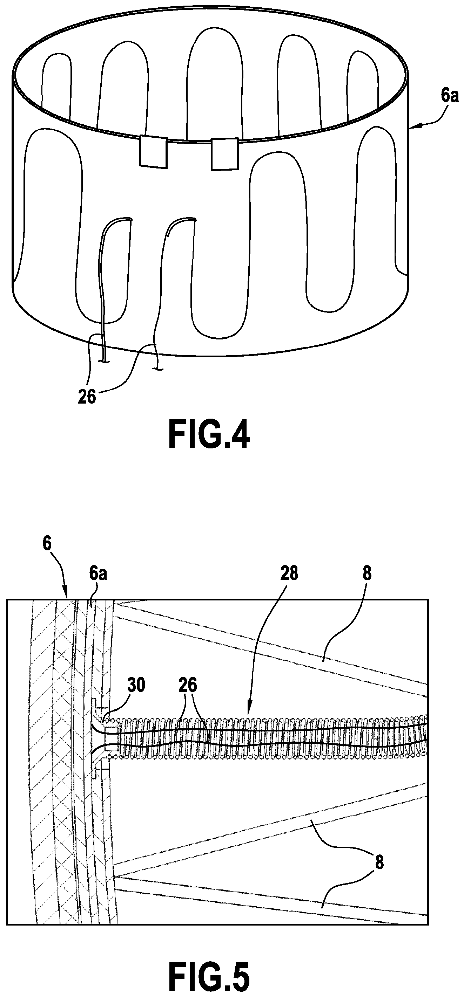

Comme représenté sur les figures 2 et 4, la bande lamifiée 6 se compose d'une pluralité de viroles concentriques 6a qui sont assemblées entre elles en prenant en sandwich des couches d'interposition 6b composées chacune d'un matériau dont le module de Young est de 600000 à 1000 fois inférieur à celui des viroles.

Les viroles 6a peuvent être métalliques (par exemple en acier) ou réalisées en matériau composite.

Quant aux couches d'interposition 6b, elles sont avantageusement réalisées en un élastomère hyperélastique ayant une température de transition vitreuse inférieure à 120°C.

Grâce à une telle composition de la bande lamifiée 6, la partie de la bande lamifiée qui est en contact avec le sol se déforme sous une charge appliquée de l'extérieur mais sous une forme épousant la surface du sol tout en maintenant une longueur essentiellement constante des viroles 6a qui la composent. Le déplacement relatif des viroles de la bande lamifiée se produit par cisaillement dans les couches d'interposition 6b.

Comme représenté notamment sur la figure 1, le moyeu 4 de la roue porte deux disques 12, 14 qui font saillie radialement vers l'extérieur. Ces deux disques 12, 14 sont espacés l'un de l'autre selon l'axe X-X de la roue et présentent chacun un diamètre extérieur contre lequel la surface intérieure de la bande lamifiée 6 est apte à venir en butée afin de limiter les déformations de celle-ci.

Les câbles 8 viennent relier radialement la bande lamifiée 6 au moyeu 4. A cet effet, chaque câble 8 comprend une extrémité extérieure 8a qui est fixée sur des baguettes 16 elles-mêmes montées contre une surface extérieure de la bande lamifiée.

Dans cette configuration, les extrémités extérieures 8a des câbles traversent l'ensemble des viroles 6a et couches d'interposition 6b de la bande lamifiée. Bien entendu, il est possible d'envisager que les extrémités extérieures 8a des câbles soient fixées sur la surface intérieure de la bande lamifiée.

Au niveau de leur extrémité intérieure respective, les câbles 8 sont fixés sur le moyeu 4 de préférence par l'intermédiaire d'un organe élastique 18 permettant de moduler la raideur radiale des câbles. Ici également, les extrémités intérieures 8b des câbles traversent le moyeu dans son épaisseur.

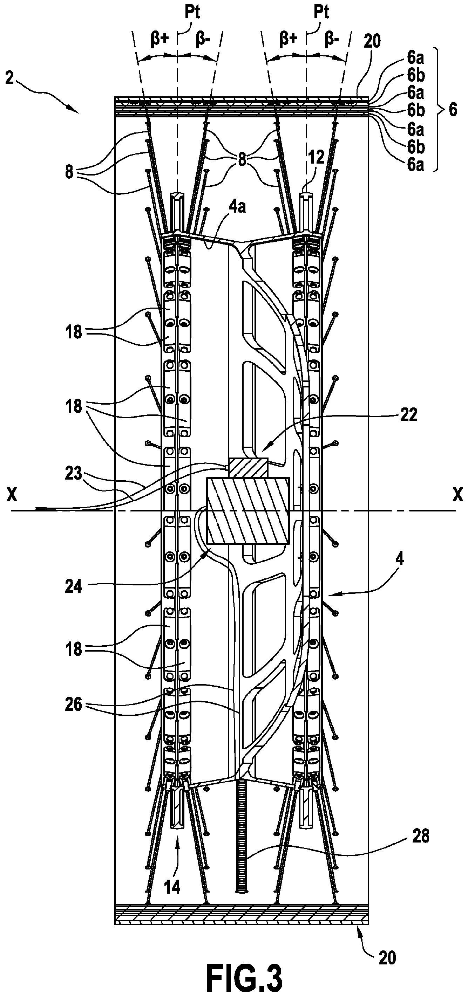

Dans le mode de réalisation des figures 1 à 3, les organes élastiques 18 sont des ressorts à lame qui présentent chacun une forme de plaque allongée et qui sont fixés en leur centre par des rivets contre une surface intérieure 4a du moyeu.

Dans un autre mode de réalisation non représenté sur les figures (mais décrit dans la demande de brevet EP22192685), les organes élastiques peuvent se présenter sous la forme de lames pliées en U (c'est-à-dire à 180°) formant des ressorts permettant de moduler la raideur radiale des câbles.

Chaque câble 8 est composé par un assemblage de fils métalliques (par exemple en acier) constitués en torons, eux-mêmes rassemblés autour d'une âme métallique. A titre d'exemple, chaque câble comporte 6 ou 7 torons composés chacun de 7 à 61 fils métalliques, l'ensemble présentant un diamètre externe compris entre 0,2 mm et 5 mm.

De plus, chaque câble 8 peut avantageusement posséder un rapport entre sa raideur mécanique en traction Kt et sa raideur mécanique en compression Kc qui est compris entre 50000 et 300000 (i.e. 5000 ≤ Kt/Kc ≤ 300000), et de préférence compris entre 25000 et 150000 (i.e. 25000 ≤ Kt/Kc ≤ 150000).

Ces valeurs de raideur mécanique Kt et Kc ont été obtenues en suivant les recommandations des normes ISO 2408 :2017 et ISO 17893 :2004 (relatives aux exigences des câbles en acier) et en utilisant une machine d'essais de la marque « INSTRON^{®} », modèle 34TM-10.

En d'autres termes, les câbles 8 présentent une asymétrie de raideur avec une raideur mécanique en traction Kt qui est fortement supérieure à leur raideur mécanique en compression Kc.

Par ailleurs, dans le mode de réalisation de la figure, les câbles 8 présentent une répartition particulière tout autour de l'axe X-X de la roue avec une première double rangée de n câbles dont les extrémités intérieures respectives sont positionnées du côté interne de la roue, et une seconde double rangée de m câbles dont les extrémités intérieures respectives sont positionnées du côté externe de la roue.

Plus précisément, pour chaque double rangée de câbles, les extrémités intérieures sont montées sur le moyeu en étant positionnées latéralement entre l'un des deux disques 12, 14 et le bord latéral (interne et externe) du moyeu. Le nombre n, m de câbles peut être le même pour chaque double rangée de câbles.

De plus, comme représenté sur la figure 2, chaque câble 8 est avantageusement incliné par rapport à un plan radial Pr au moyeu 4 d'un angle α compris (en valeur absolue) entre 0,1° et 45°, et de préférence égal à 10° (en valeur absolue).

En particulier, pour une même rangée de câbles, il peut être avantageux de prévoir une alternance des inclinaisons entre câbles adjacents (l'un des câbles aurait un angle d'inclinaison α positif - noté « α+ » sur la figure 2 - et le câble adjacent aurait un angle d'inclinaison α négatif - noté « α- » sur la figure 2).

De même, comme représenté sur la figure 4, chaque câble 8 est avantageusement incliné par rapport à un plan transversal Pt au moyeu 4 d'un angle β compris entre 0,1° et 45° (en valeur absolue), et de préférence égal à 10° (en valeur absolue).

En particulier, pour chacune des deux doubles rangés de câbles, il peut être avantageux de prévoir que tous les câbles appartenant à l'une des deux rangées présentent un angle d'inclinaison β positif (noté « β+ » sur la figure 4) et tous les câbles appartenant à l'autre des deux rangées présentent un angle d'inclinaison β négatif (noté « β- » sur la figure 4).

Ces inclinaisons α, β des câbles 8 permettent d'augmenter la rigidité de la roue lorsqu'elle est sollicitée latéralement (par exemple dans un virage) ou lorsque le véhicule équipé d'une telle roue freine.

Selon l'invention, la bande lamifiée 6 de la roue 2 est recouverte d'au moins un revêtement d'isolation thermique 20 qui est réalisé dans au moins un matériau ayant une conductivité thermique inférieure à 0.2 Wm⁻¹K⁻¹, c'est-à-dire très faible.

Par exemple, ce revêtement d'isolation thermique 20 peut être réalisé dans l'un ou plusieurs des matériaux suivants : fibre synthétique d'aramide (notamment du Kevlar^{®}), fibre de verre, acétate de polyvinyle, et cuir.

Par ailleurs, afin de diminuer davantage la conductivité thermique effective du revêtement d'isolation thermique, il est avantageux de le munir de « poches » ou ouvertures de vide à l'intérieur. Ceci est par exemple obtenu au moyen d'un matériau tissé.

De plus, le revêtement d'isolation thermique 20 peut être réalisé par un assemblage de plusieurs matériaux, notamment par un empilement de plusieurs couches de différents matériaux. Par exemple, le revêtement d'isolation thermique 20 peut être réalisé par un empilement d'une couche de cuir de 3 à 5mm d'épaisseur, d'une couche d'aluminium permettant de limiter les radiations, d'une couche de tissu aramide de 5 à 10mm d'épaisseur, et d'une couche en acétate de polyvinyle de 1 à 2mm d'épaisseur.

Plus généralement, le revêtement d'isolation thermique 20 est avantageusement recouvert sous une face interne d'un revêtement métallique (par exemple une couche d'aluminium) pour limiter le transfert d'énergie thermique par radiations.

Toujours selon l'invention, la roue 2 comprend en outre des moyens de chauffage des couches d'interposition 6b de la bande lamifiée.

Ces moyens de chauffage des couches d'interposition 6b de la bande lamifiée peuvent comprendre des contacts tournants pour établir une connexion électrique rotative entre le moyeu 4 de la roue et les viroles 6a de la bande lamifiée.

La figure 2 montre un exemple de mise en œuvre de tels contacts tournants : un bloc de balais (ou brosses) 22 est solidaire du véhicule équipé de la roue 2 et alimenté en électricité depuis celui-ci par l'intermédiaire de câbles d'alimentation 23. Ce bloc de balais 22 est en contact électrique avec une bague 24 (ou anneau) centré sur l'axe X-X de la roue et solidaire du moyeu 4 de celle-ci afin d'assurer un transfert de l'alimentation électrique vers les viroles 6a de la bande lamifiée par l'intermédiaire de fils électriques chauffant 26 qui sont enroulés dans l'épaisseur des viroles 6a de la bande lamifiée.

De façon avantageuse comme représenté sur la figure 4, lorsque les viroles 6a de la bande lamifiée sont réalisées en matériau composite et les couches d'interposition 6b sont composées d'un élastomère hyperélastique, les fils électriques chauffant 26 peuvent être noyés dans le matériau composite de l'une des viroles lors de sa fabrication afin d'acheminer des calories à l'élastomère hyperélastique composant les couches d'interposition 6b.

Dans ce cas, les fils électriques chauffant 26 sont de préférence positionnés au niveau d'une fibre neutre dans le sens circonférentiel (i.e. la fibre qui ne subit aucune variation de longueur, quelle que soit la déformation en flexion de la virole) du matériau composite en une pluralité de boucles 26a qui sont espacées circonférentiellement les unes des autres.

Par ailleurs, comme représenté en détails sur la figure 5, les fils électriques chauffant 26 peuvent avantageusement cheminer à l'intérieur d'un ressort 28 dont une extrémité est vissée côté bande lamifiée sur une collerette 30 elle-même fixée sur la virole 6a de la bande lamifiée contenant le fils électrique chauffant, et une extrémité opposée qui est fixée au moyeu.

Le recours à un tel ressort pour faire cheminer les fils électriques chauffant présentent de nombreux avantages, notamment ceux de pouvoir garantir la protection des fils contre d'éventuels contacts avec des pierres, et de permettre un déplacement de plusieurs centimètres entre le moyeu et la bande lamifiée.

Selon une autre disposition avantageuse (non représentée sur les figures), il peut être prévu des moyens de mesure de la température (par exemple des thermocouples ou autres capteurs de différents types) des couches d'interposition 6b de la bande lamifiée afin de contrôler la puissance de chauffage à acheminer vers celles-ci pour éviter que leur température ne s'approche de la température de transition vitreuse du matériau qui les compose.

Par exemple, la température des couches d'interposition 6b de la bande lamifiée peut être suivie à l'aide de fibres optiques à réseau de Bragg (connues en soi) qui sont directement insérées dans l'épaisseur des viroles 6a.

L'avantage de recourir à des fibres optiques à réseau de Bragg est qu'elles permettent également de surveiller les déformations et d'en déduire les contraintes subies par le matériau composant les viroles de la bande lamifiée.

Alternativement, la surveillance de la température des couches d'interposition 6b de la bande lamifiée peut être obtenue au moyen d'une sonde de température, par exemple un thermomètre à résistance de platine (appelé également sonde RTD pour « Resistance Temperature Detector »).

Selon encore une autre disposition avantageuse (non représentée sur les figures), il peut être prévu des moyens de mesure des déformations et contraintes de la bande lamifiée, par exemple à l'aide de fibres optiques à réseau de Bragg.

On notera que les moyens de mesure de la température des couches d'interposition de la bande lamifiée et les moyens de mesure des déformations et contraintes de la bande lamifiée peuvent avantageusement cheminer au travers du ressort utilisé pour faire cheminer les fils électriques chauffant.

## Revendications

1. Roue (2) déformable à support de charge non-pneumatique destinée à équiper un véhicule pour rouler en conditions extrêmes comme celles rencontrées sur la Lune et sur Mars, comprenant :
un moyeu (4),
une bande annulaire lamifiée (6) destinée à être en contact avec le sol, positionnée autour du moyeu qui lui est concentrique et comprenant une pluralité de viroles (6a) concentriques qui sont assemblées avec interposition de couches d'interposition (6b) composées chacune d'un matériau dont le module de Young est de 600000 à 1000 fois inférieur à celui des viroles, et
une pluralité de câbles (8) métalliques reliant radialement le moyeu à la bande lamifiée en étant fixé, d'une part par une extrémité extérieure (8a) à la bande lamifiée (6), et d'autre part par une extrémité intérieure (8b) au moyeu (4),
**caractérisée en ce que** :
la bande lamifiée est recouverte d'au moins un revêtement d'isolation thermique (20) réalisé dans au moins un matériau ayant une conductivité thermique inférieure à 0.2 Wm⁻¹K⁻¹, et
la roue comprend en outre des moyens de chauffage (22, 24, 26) des couches d'interposition (6b) de la bande lamifiée.

2. Roue selon la revendication 1, dans laquelle les moyens de chauffage de la bande lamifiée comprennent des contacts tournants (22, 24) pour établir une connexion électrique rotative entre le moyeu (4) de la roue et les viroles (6a) de la bande lamifiée (6).

3. Roue selon la revendication 2, dans laquelle les contacts tournants (22, 24) sont couplés à des fils électriques chauffant (26) qui sont enroulés dans l'épaisseur des viroles de la bande lamifiée.

4. Roue selon la revendication 3, dans laquelle les viroles (6a) de la bande lamifiée (6) sont réalisées en matériau composite et les couches d'interposition (6b) sont composées d'un élastomère hyperélastique, les fils électriques (26) des moyens de chauffage de la bande lamifiée étant noyés dans le matériau composite lors de la fabrication des viroles afin d'acheminer des calories à l'élastomère composant les couches d'interposition.

5. Roue selon la revendication 4, dans laquelle les fils électriques (26) sont positionnés au niveau d'une fibre neutre dans le sens circonférentiel du matériau composite, étant la fibre qui ne subit aucune variation de longueur, quelle que soit la déformation en flexion de la virole, en une pluralité de boucles espacées circonférentiellement les unes des autres.

6. Roue selon l'une quelconque des revendications 3 à 5, dans laquelle les fils électriques chauffant (26) cheminent à l'intérieur d'un ressort (28) dont une extrémité est vissée côté bande lamifiée sur une collerette (30) fixée sur une virole (6a) de la bande lamifiée contenant le fils électrique chauffant, et une extrémité opposée est fixée au moyeu.

7. Roue selon l'une quelconque des revendications 1 à 6, dans laquelle le revêtement d'isolation thermique (20) est réalisé dans l'un ou plusieurs des matériaux suivants : fibre synthétique d'aramide, fibre de verre, acétate de polyvinyle, et cuir.

8. Roue selon l'une quelconque des revendications 1 à 7, dans laquelle le revêtement d'isolation thermique (20) est recouvert sous une face interne d'un revêtement métallique pour limiter le transfert d'énergie thermique par radiations.

9. Roue selon l'une quelconque des revendications 1 à 8, comprenant en outre des moyens de mesure de la température des couches d'interposition de la bande lamifiée.

10. Roue selon l'une quelconque des revendications 1 à 9, comprenant en outre des moyens de mesure des déformations et contraintes de la bande lamifiée.

## Patentansprüche

1. Verformbares, nicht-pneumatisches, lasttragendes Rad (2), das ausgelegt ist, um ein Fahrzeug auszustatten, um unter extremen Bedingungen wie denjenigen zu fahren, die auf dem Mond und dem Mars angetroffen werden, umfassend:
eine Nabe (4),
ein ringförmiges laminiertes Band (6), das ausgelegt ist, um mit dem Boden in Kontakt zu sein, das um die Nabe positioniert ist, die konzentrisch damit ist, und umfassend eine Vielzahl von konzentrischen Zwingen (6a), die durch Einfügen von Zwischenschichten (6b) zusammengebaut sind, die jeweils aus einem Material zusammengesetzt sind, dessen Young'sches Modul 600000 bis 1000 Mal kleiner als dasjenige der Zwingen ist, und
eine Vielzahl von metallischen Kabeln (8), die die Nabe radial mit dem laminierten Streifen verbinden, und einerseits durch ein äußeres Ende (8a) am laminierten Streifen (6) und andererseits durch ein inneres Ende (8b) an der Nabe (4) fixiert sind,
**dadurch gekennzeichnet, dass**:
der laminierte Streifen mit mindestens einer Wärmedämmschicht (20) bedeckt ist, die aus mindestens einem Material mit einer Wärmeleitfähigkeit von weniger als 0,2 Wm⁻¹K⁻¹ beschichtet ist und
das Rad außerdem Heizmittel (22, 24, 26) der Zwischenschichten (6b) des laminierten Streifens umfasst.

2. Rad nach Anspruch 1, wobei die Heizmittel des laminierten Streifens drehende Kontakte (22, 24) umfassen, um eine drehende elektrische Verbindung zwischen der Nabe (4) des Rads und den Zwingen (6a) des laminierten Streifens (6) herzustellen.

3. Rad nach Anspruch 2, wobei die drehenden Kontakte (22, 24) mit elektrischen Heizdrähten (26) gekoppelt sind, die innerhalb der Dicke der Zwingen des laminierten Streifens gewickelt sind.

4. Rad nach Anspruch 3, wobei die Zwingen (6a) des laminierten Streifens (6) aus einem Verbundmaterial hergestellt sind und die Zwischenschichten (6b) aus einem hyperelastischen Elastomer zusammengesetzt sind, wobei die elektrischen Drähte (26) der Heizmittel des laminierten Streifens bei der Herstellung der Zwingen in den Verbundwerkstoff eingetaucht werden, um Wärme an das Elastomer, das die Zwischenschichten bildet, zu leiten.

5. Rad nach Anspruch 4, wobei die elektrischen Drähte (26) auf der Ebene einer neutralen Faser in Umfangsrichtung des Verbandmaterials positioniert sind, wobei es die Faser ist, deren Länge, unabhängig von der Biegeverformung der Zwinge, in einer Vielzahl Schleifen, die in Umfangsrichtung voneinander beabstandet sind, keine Variation erfährt.

6. Rad nach einem der Ansprüche 3 bis 5, wobei die elektrischen Heizdrähte (26) im Inneren einer Feder (28) verlaufen, von der ein Ende auf der Seite des laminierten Streifens auf einen Kragen (30) geschraubt ist, der auf eine Zwinge (6a) des laminierten Streifens fixiert ist, die die elektrischen Heizdrähte enthält, und ein gegenüberliegendes Ende an die Nabe fixiert ist.

7. Rad nach einem der Ansprüche 1 bis 6, wobei die Wärmedämmschicht (20) aus einem oder mehreren der folgenden Materialien hergestellt ist: Aramid-Kunstfaser, Glasfaser, Polyvinylacetat und Leder.

8. Rad nach einem der Ansprüche 1 bis 7, wobei die Wärmedämmschicht (20) unter einer Innenseite mit einer metallischen Beschichtung versehen ist, um die Wärmeübertragung durch Strahlung zu begrenzen.

9. Rad nach einem der Ansprüche 1 bis 8, umfassend außerdem Mittel zum Messen der Temperatur der Zwischenschichten des laminierten Streifens.

10. Rad nach einem der Ansprüche 1 bis 9, umfassend außerdem Mittel zum Messen der Verformungen und Belastungen des laminierten Streifens.

## Claims

1. A deformable wheel (2) with non-pneumatic load bearing intended to equip a vehicle for driving in extreme conditions such as those encountered on the Moon and on Mars, comprising:
a hub (4),
a laminated annular strip (6) intended to be in contact with the ground, positioned around the hub which is concentric therewith and comprising a plurality of concentric ferrules (6a) that are assembled with the interposition of interposition layers (6b) each composed of a material the Young's modulus of which is 600000 to 1000 times lower than that of the ferrules, and
a plurality of metal cables (8) radially connecting the hub to the laminated strip while being fastened, on the one hand by an outer end (8a) to the laminated strip (6), and on the other hand by an inner end (8b) to the hub (4),
**characterized in that**:
the laminated strip is covered with at least one thermal insulation coating (20) made of at least one material having a thermal conductivity of less than 0.2 Wm⁻¹K⁻¹, and
the wheel further comprises means (22, 24, 26) for heating the interposition layers (6b) of the laminated strip.

2. The wheel according to claim 1, wherein the means for heating the laminated strip comprise rotating contacts (22, 24) for establishing a rotating electrical connection between the hub (4) of the wheel and the ferrules (6a) of the laminated strip (6).

3. The wheel according to claim 2, wherein the rotating contacts (22, 24) are coupled to electric heating wires (26) which are wound in the thickness of the ferrules of the laminated strip.

4. The wheel according to claim 3, wherein the ferrules (6a) of the laminated strip (6) are made of composite material and the interposition layers (6b) are composed of a hyperelastic elastomer, the electric wires (26) of the heating means of the laminated strip being embedded in the composite material during the manufacture of the ferrules in order to convey calories to the elastomer making up the interposition layers.

5. The wheel according to claim 4, wherein the electric wires (26) are positioned at a neutral fiber in the circumferential direction of the composite material, being the fiber which does not undergo any variation in length, regardless of the bending deformation of the ferrule, in a plurality of loops circumferentially spaced from each other.

6. The wheel according to any one of claims 3 to 5, wherein the electric heating wires (26) run inside a spring (28) one end of which is screwed on the side of the laminated strip onto a collar (30) fastened to a ferrule (6a) of the laminated strip containing the electric heating wire, and an opposite end is fastened to the hub.

7. The wheel according to any one of claims 1 to 6, wherein the thermal insulation coating (20) is made of one or more of the following materials: synthetic aramid fiber, fiberglass, polyvinyl acetate, and leather.

8. The wheel according to any one of claims 1 to 7, wherein the thermal insulation coating (20) is covered under an internal face with a metallic coating to limit the transfer of thermal energy by radiation.

9. The wheel according to any one of claims 1 to 8, further comprising means for measuring the temperature of the interposition layers of the laminated strip.

10. The wheel according to any one of claims 1 to 9, further comprising means for measuring the deformations and stresses of the laminated strip.
